# EUROPÄISCHE PATENTSCHRIFT

(11) **EP 1 970 519 B1**
(45) Veröffentlichungstag und Bekanntmachung des Hinweises auf die Patenterteilung: **20.01.2010**
(21) Anmeldenummer: 07005070.3
(22) Anmeldetag: 12.03.2007
(51) Int. Cl.: E05F 15/20, E05F 15/14

(54) **Türbetätigungsverfahren**
Door actuating method
Procédé d'actionnement de porte

(43) Veröffentlichungstag der Anmeldung: 17.09.2008
(73) Patentinhaber: Delphi Technologies, Inc., Troy, Michigan 48007 (US)
(72) Erfinder: Longuemare, Pierre Claude, 75012 Paris (FR); Benthaus, Oliver, 42119 Wuppertal (DE); Amshoff, Werner, 42289 Wuppertal (DE)
(74) Vertreter: Manitz, Finsterwald & Partner GbR

(56) Entgegenhaltungen:
- EP-A- 1 643 274
- DE-A1- 19 639 974
- DE-A1- 19 911 592
- US-A- 5 350 986

## Beschreibung

Die vorliegende Erfindung betrifft ein Verfahren zum Betätigen einer mit einem elektrischen Antriebsmotor gekoppelten Tür, insbesondere eines Fahrzeugs.

Bei einem bekannten Verfahren der eingangs genannten Art wird die Tür, z.B. eine Schiebetür eines Kraftfahrzeugs, im Falle einer Aktivierung durch eine Fernbedienung, beispielsweise durch einen Transponderschlüssel, automatisch geöffnet oder geschlossen. Hierbei besteht das Problem, dass die Zeitdauer eines vollständigen Öffnungs- bzw. Schließvorgangs typischerweise im Bereich von einigen Sekunden liegt, was von einer die Tür betätigenden Person unter gewissen Umständen, z.B. bei widrigen Wetterverhältnissen oder bei Panik, als zu lang empfunden werden kann. Der automatische Schließvorgang lässt sich in solchen Situationen nicht beschleunigen, da der die Tür bewegende Antriebsmotor üblicherweise auf eine im Wesentlichen konstante Öffnungs- bzw. Schließgeschwindigkeit der Tür geregelt wird.

Einige herkömmliche Türbetätigungsvorrichtungen sehen neben einer automatischen Bewegung der Tür zusätzlich die Möglichkeit einer manuellen Betätigung der Tür vor. Dabei muss zur manuellen Betätigung der Tür entweder eine dem gesamten Türantriebsmechanismus innewohnende Reibungskraft einschließlich eines inneren Widerstands des Antriebsmotors überwunden werden, so dass zur manuellen Betätigung der Tür ein erhöhter Kraftaufwand erforderlich ist. Oder der Antriebsmechanismus ist mittels eines Kupplungsmechanismus, durch den die Herstellungskosten der Türantriebsvorrichtung erheblich erhöht sind, von der Tür abkoppelbar.

Ein Türbetätigungsverfahren gemäß dem Oberbegriff des Anspruchs 1 ist aus der DE-A-199 11 592 bekannt. Weitere Türbetätigungsverfahren sind in der US-A-5 350 986 und in der DE-A-196 39 974 beschreiben.

Der Erfindung liegt die Aufgabe zugrunde, ein Türbetätigungsverfahren zu schaffen, welches auf einfache Weise eine manuelle Betätigung einer automatisch betätigbaren Tür mit minimalem Kraftaufwand ermöglicht.

Zur Lösung der Aufgabe ist ein Verfahren mit den Merkmalen des Anspruchs 1 vorgesehen.

Erfindungsgemäß wird ein mit einer Tür, beispielsweise eines Fahrzeugs und insbesondere eines Kraftfahrzeugs, gekoppelter elektrischer Antriebsmotor bei einer manuellen Betätigung der Tür durch eine Motorsteuerung derart gesteuert, dass der Antriebsmotor eine Kraft auf die Tür ausübt, durch welche eine der manuellen Betätigung entgegenwirkende systeminhärente Kraft zumindest teilweise kompensiert wird.

Unter dem Begriff "systeminhärente Kraft" sind in diesem Kontext alle diejenigen Kräfte zusammengefasst, die bedingt durch die Konstruktion des Kopplungsmechanismus zwischen Antriebsmotor und Tür, der Aufhängung der Tür sowie der Masse der Tür einer manuellen Betätigung entgegenwirken und somit zur manuellen Bewegung der Tür überwunden werden müssen. Dies können beispielsweise Reibungskräfte von Seilzügen oder anderen Kraftübertragungsmitteln des Antriebsmechanismus sein.

Der Erfindung liegt der allgemeine Gedanke zugrunde, die manuelle Betätigung einer Tür durch einen mit der Tür gekoppelten elektrischen Antriebsmotor derart zu unterstützen, dass eine die Tür betätigende Person die Tür mit einem minimalen Kraftaufwand bewegen kann. Die durch den Antriebsmotor auf die Tür ausgeübte Kraft kann dabei so groß gewählt sein, dass die der manuellen Betätigung entgegenwirkende systeminhärente Kraft durch den Antriebsmotor weitgehend neutralisiert wird.

Alternativ kann es möglich sein, dass der Grad, in wieweit die der manuellen Betätigung entgegenwirkende systeminhärente Kraft kompensiert wird, durch eine die Türbetätigungsvorrichtung vornehmlich betätigende Person eingestellt wird. Die Einstellung des Kompensationsgrades kann dabei kontinuierlich oder in Stufen erfolgen. Auf diese Weise kann z.B. ein Fahrzeughalter oder -nutzer die Türbetätigungsvorrichtung an seine Bedürfnisse anpassen.

Erfindungsgemäß wird der Antriebsmotor mit einem Strom einer vorbestimmten Stärke beaufschlagt und die an den Antriebsmotor angelegte Spannung offen gelassen, d.h. kein fester Spannungswert vorgegeben. Durch die Vorgabe der Stärke des dem Antriebsmotor zugeführten Stroms lässt sich die durch den Antriebsmotor auf die Tür ausgeübte Kraft einstellen, wohingegen sich die offen gelassene Spannung am Antriebsmotor je nach Drehzahl des Antriebsmotors und somit letztlich nach Türbetätigungsgeschwindigkeit selbsttätig einstellt. So steigt die Spannung am Antriebsmotor mit zunehmender Türbetätigungsgeschwindigkeit bzw. Drehzahl des Antriebsmotors an. Dies führt dazu, dass der Antriebsmotor bei unterschiedlichen Türbetätigungsgeschwindigkeiten zwar unterschiedliche Leistungen liefert, aber aufgrund der vorgegebenen Stromstärke stets eine vorbestimmte Kraft auf den Antriebsmechanismus und somit letztlich auf die Tür ausübt, um die manuelle Betätigung der Tür für die die Tür betätigende Person definiert leichtgängig erscheinen zu lassen.

Dadurch, dass der Antriebsmotor zur Unterstützung der manuellen Betätigung der Tür verwendet wird, braucht keine aufwendige und kostspielige Kupplung vorgesehen zu werden, um den Antriebsmotor bei einer manuellen Betätigung der Tür von dieser zu trennen. Statt dessen wird eine besonders leichtgängige manuelle Türbetätigung erfindungsgemäß ausschließlich durch diejenigen Komponenten erreicht, die in einer automatischen Türbetätigungsvorrichtung ohnehin vorhanden sein müssen, nämlich den Antriebsmotor und den Antriebsmechanismus, durch welchen der Antriebsmotor mit der Tür gekoppelt ist.

Darüber hinaus lässt sich das erfindungsgemäße Verfahren auch in bereits bestehenden Türbetätigungsvorrichtungen implementieren, da hierzu lediglich die Motorsteuerung so angepasst werden muss, dass sie den Antriebsmotor in der erfindungsgemäßen Art und Weise steuern kann.

Es wird darauf hingewiesen, dass eine "Tür" im Sinne der Erfindung nicht nur eine Schiebetür, eine Schwenkschiebetür, eine Schwenktür oder eine Flügeltür, sondern auch eine Motorhaube, eine Heckklappe, ein Kofferraumdeckel oder dergleichen sein kann.

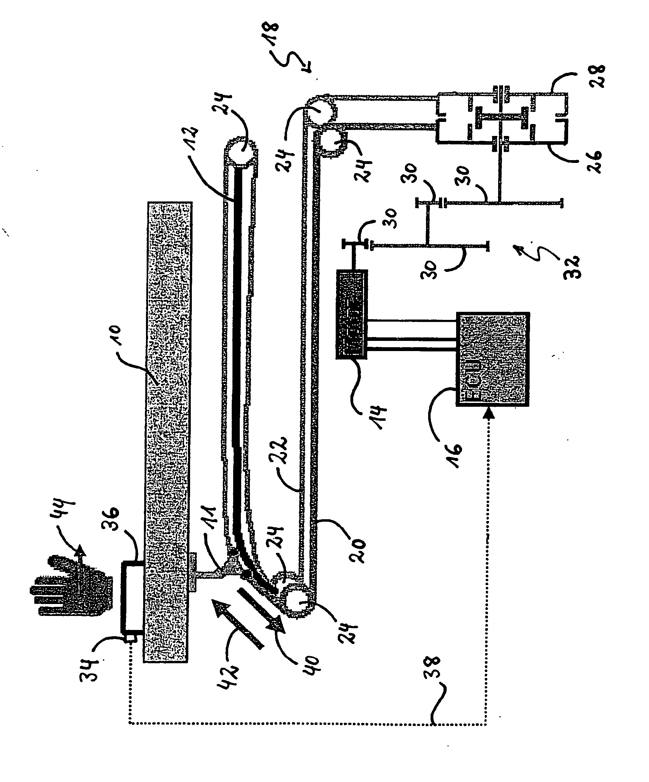

Vorteilhafte Ausbildungen der Erfindung sind den Unteransprüchen, der Beschreibung und der Zeichnung zu entnehmen.

Gemäß einer Ausführungsform des erfindungsgemäßen Verfahrens wird der Antriebsmotor derart gesteuert, dass die Stärke der durch den Antriebsmotor auf die Tür ausgeübten Kraft im Wesentlichen unabhängig von der Geschwindigkeit ist, mit welcher die Tür manuell betätigt wird.

Auf diese Weise ist sichergestellt, dass eine Person unabhängig davon, ob sie die Tür schnell oder langsam betätigt, einen stets gleich bleibend reduzierten Kraftaufwand zum Schließen bzw. Öffnen der Tür aufbringen muss.

Gemäß einer Variante kann die vorbestimmte Stromstärke auf einen festen Wert voreingestellt sein. Dieser feste Wert kann beispielsweise so gewählt sein, dass die resultierende Kraft, die durch den Antriebsmotor auf die Tür ausgeübt wird, diejenige systeminhärent Kraft neutralisiert, die bei einer manuellen Betätigung der Tür eines auf waagerechtem Untergrund abgestellten Fahrzeugs überwunden werden muss.

Alternativ ist es möglich, die vorbestimmte Stromstärke in Abhängigkeit von äußeren Einflüssen, wie z.B. der Fahrzeugneigung oder des Umgebungsklimas, einzustellen. Auf diese Weise kann z.B. der Tatsache Rechnung getragen werden, dass z.B. besonders tiefe Außentemperaturen erhöhte Kräfte zur Betätigung der Tür erforderlich machen können oder dass sich die Tür eines an einem Abhang abgestellten Fahrzeugs aufgrund der Masse der Tür unter Umständen schwerer bewegen lässt. So kann durch eine Erhöhung der Stromstärke die durch den Antriebsmotor auf die Tür ausgeübte Kraft beispielsweise erhöht werden, um die stärker ins Gewicht fallende Masse einer bergauf zu schiebenden Tür auszugleichen. Die Neigung des Fahrzeugs lässt sich in an sich bekannter Weise z.B. durch einen Neigungssensor ermitteln.

Durch eine Anpassung der Stärke des dem Antriebsmotor zugeführten Stroms an die jeweiligen äußeren Umstände lässt sich eine leichte manuelle Türbetätigung in nahezu jeder, bei bestimmungsgemäßen Gebrauch des Fahrzeugs vorkommenden Situation sicherstellen.

Alternativ oder zusätzlich kann man die einzustellende vorbestimmte Stromstärke anhand der Auslenkung eines Türgriffs einer Tür ermitteln, an dem die Tür manuell betätigt wird.

Gemäß einer weiteren Ausführungsform wird die Tür bei einer Betätigung mittels einer Fernbedienung im Wesentlichen ausschließlich durch den Antriebsmotor betätigt. Hierbei handelt es sich also um einen Automatikbetrieb der Türbetätigungsvorrichtung.

Der Antriebsmotor, der im Automatikbetrieb zur Betätigung der Tür verwendet wird, ist bevorzugt der gleiche Antriebsmotor, der auch zur erfindungsgemäßen Unterstützung einer manuellen Betätigung der Tür verwendet wird. Grundsätzlich ist es jedoch auch möglich, bei der manuellen und automatischen Betätigung der Tür zwei verschiedene Antriebsmotoren einzusetzen.

Im Automatikbetrieb der Türbetätigungsvorrichtung kann sich die Motorsteuerung in einem an sich bekannten automatischen Modus befinden, so dass sich die Tür mit einer vorgegebenen, im Wesentlichen konstanten Geschwindigkeit bewegt. Der Automatikbetrieb steht somit im Gegensatz zum manuellen Betrieb, in welchem sich die Motorsteuerung in einem manuellen Modus befindet und die Stärke des dem Antriebsmotor zugeführten Stroms - und nicht die Drehzahl des Antriebsmotors - vorgegeben wird.

Gemäß einer weiteren Ausführungsform wechselt die Motorsteuerung aus dem automatischen Modus in den manuellen Modus, wenn ein manueller Eingriff in einen automatischen Betätigungsvorgang der Tür detektiert wird. Mit anderen Worten schaltet die Türbetätigungsvorrichtung aus dem Automatikbetrieb, in welchem der Antriebsmotor mit einer vorgegebenen Drehzahl betrieben wird, in den manuellen Betrieb, in welchem der Antriebsmotor mit einer vorgegebenen Stromstärke betrieben wird, sobald eine Person einen stattfindenden Öffnungs- bzw. Schließvorgang manuell beschleunigt oder verlangsamt.

Dabei kann der manuelle Eingriff z.B. durch eine Betätigung eines Türgriffs der Tür detektiert werden, beispielsweise mittels eines geeigneten Kontaktsensors.

Alternativ oder zusätzlich kann die Tür einen Teil eines elektromagnetischen Schwingkreises bilden und der manuelle Eingriff durch eine Änderung der Impedanz des Schwingkreises detektiert werden. Dies ermöglicht die Detektion eines manuellen Eingriffs auch dann, wenn eine die Tür betätigende Person die Tür nicht am Türgriff anlangt, sondern an einer anderen Stelle der Tür auf diese einwirkt, die Tür z.B. mit einem Fuß auf- bzw. zuschiebt oder -drückt.

Weiterer Gegenstand der Erfindung ist außerdem eine Türbetätigungsvorrichtung mit den Merkmalen des Anspruchs 12, durch welche die voranstehend genannten Vorteile entsprechend erreichbar sind. Gemäß vorteilhaften Ausführungsformen ist die Vorrichtung so ausgebildet, dass sich die voranstehend erläuterten Ausführungsformen des erfindungsgemäßen Verfahrens entsprechend ausführen lassen.

Nachfolgend wird die Erfindung rein beispielhaft anhand einer vorteilhaften Ausführungsform unter Bezugnahme auf die beigefügte Zeichnung beschrieben.

Die einzige Figur zeigt eine schematische Darstellung einer erfindungsgemäßen Vorrichtung zum Betätigung einer Tür, im vorliegenden Ausführungsbeispiel einer Schiebetür 10 eines Kraftfahrzeugs, die mittels eines Schlittens 11 an einer Führungsschiene 12 gelagert ist und zum Öffnen bzw. Schließen der Tür entlang der Führungsschiene 12 relativ zu einem Chassis des Fahrzeugs bewegbar ist.

Die Türbetätigungsvorrichtung umfasst einen elektrischen Antriebsmotor 14, welcher durch eine Motorsteuerung 16 gesteuert und über einen Antriebsmechanismus 18 mit der Schiebetür 10 gekoppelt ist.

Der Antriebsmechanismus 18 umfasst einen ersten Seilzug 20 und einen zweiten Seilzug 22, welche durch mehrere Umlenkrollen 24 umgelenkt sind. Jeder Seilzug 20, 22 weist ein türseitiges Ende auf, welches mit dem Schlitten 11 fest verbunden ist. Ein motorseitiger Endabschnitt des ersten Seilzugs 20 ist auf einer ersten Trommel 26 aufwickelbar, und ein motorseitiger Endabschnitt des zweiten Seilzugs 22 ist auf einer zweiten Trommel 28 aufwickelbar. Die Trommeln 26, 28 sind durch ein mehrere ineinander eingreifende Zahnräder 30 aufweisendes Getriebe 32 mit dem Antriebsmotor 14 verbunden.

Empfängt die Motorsteuerung 16 von einer Fernbedienung, wie beispielsweise einem Transponderschlüssel, ein Aktivierungssignal, welches anzeigt, dass ein Öffnungs- bzw. Schließvorgang der Schiebetür 10 gewünscht wird, so steuert die Motorsteuerung 16 den Antriebsmotor 14 derart an, dass dieser die Schiebetür 10 über den Antriebsmechanismus 18 in der gewünschten Richtung bewegt. Die Aktivierung der Motorsteuerung 16 durch die Fernbedienung bewirkt, dass die Motorsteuerung 16 in einem Automatikmodus arbeitet, in welchem der Antriebsmotor 14 so gesteuert wird, dass sich die Schiebetür 10 mit einer im Wesentlichen konstanten Geschwindigkeit entlang der Führungsschiene 12 bewegt. Zu diesem Zweck regelt die Motorsteuerung 16 die Drehzahl des Antriebsmotors 14 während des Öffnungs- bzw. Schließvorgangs.

Stellt die Motorsteuerung 16 fest, dass eine Person in den automatischen Öffnungs- bzw. Schließvorgang eingreift, beispielsweise um einen Schließvorgang zu verlangsamen oder einen Öffnungsvorgang aufgrund von Panik oder schlechtem Wetter zu beschleunigen, so wechselt die Motorsteuerung 16 aus dem Automatikmodus in einen manuellen Modus.

Zur Detektion eines Personeneingriffs in einen automatischen Öffnungs- bzw. Schließvorgang kann beispielsweise ein Kontaktsensor 34 vorgesehen sein, welcher im Bereich eines Türgriffs 36 der Schiebetür 10 angeordnet und an die Motorsteuerung 16 angebunden ist, wie durch den Pfeil 38 angedeutet ist. Alternativ oder zusätzlich kann die Schiebetür 10 einen Teil eines elektromagnetischen Schwingkreises bilden und ein Personeneingriff in einen automatischen Öffnungs- bzw. Schließvorgang durch eine Änderung der Impedanz des Schwingkreises detektiert werden.

Im manuellen Modus der Motorsteuerung 16 erfolgt keine Drehzahlregelung des Antriebsmotors 14, sondern dem Antriebsmotor 14 wird Strom mit einer vorbestimmten Stärke und Polarität zugeführt, so dass der Antriebsmotor 14 eine vorgegebene Kraft in das System einbringt. Gleichzeitig wird die an den Antriebsmotor 14 angelegte Spannung offen gelassen, so dass sich diese je nach Geschwindigkeit, mit welcher die Schiebetür 10 manuell bewegt wird, selbsttätig einstellen kann. Dabei ist die sich selbst einstellende Spannung entsprechend der Drehzahl des Antriebsmotors 14 umso höher, je schneller die Schiebetür 10 manuell bewegt wird.

Die Stärke des vorgegebenen Antriebsstroms ist so gewählt, dass eine der manuellen Betätigung der Schiebetür 10 entgegenwirkende systeminhärente Kraft 40 zumindest teilweise kompensiert wird. Die systeminhärente Kraft 40 ist die Summe aller durch die Türbetätigungsvorrichtung bedingten Kräfte, die eine Person überwinden muss, um die Schiebetür 10 manuell zu bewegen. Die systeminhärente Kraft 40 setzt sich unter anderem also aus in dem Antriebsmechanismus 18 auftretenden Reibungskräften, durch die Lagerung der Schiebetür 10 bedingten Kräften und aus der Trägheit der Schiebetür 10 selbst resultierenden Kräften zusammen.

Die Stärke des dem Antriebsmotor 14 im manuellen Modus der Motorsteuerung 16 zugeführten Stroms kann so auf einen festen Wert voreingestellt sein, dass der Antriebsmotor 14 bei einer manuellen Bewegung der Schiebetür 10 über den Antriebsmechanismus 18 eine Kraft 42 auf die Schiebetür 10 ausübt, die etwa so groß wie die systeminhärente Kraft 40 ist, welche der manuellen Betätigung entgegenwirkt, wenn sich das Fahrzeug auf waagerechtem Untergrund befindet. Bei auf waagerechtem Untergrund abgestelltem Fahrzeug wird die systeminhärente Kraft 40 durch die durch den Antriebsmotor 14 in das System eingebrachte Kraft 42 also weitgehend kompensiert, so dass eine die Schiebetür 10 betätigende Person in diesem Fall allenfalls eine minimale Kraft 44 aufbringen muss, um die Schiebetür 10 zu bewegen.

Alternativ kann eine Regelung des dem Antriebsmotor 14 zugeführten Stroms durch die Motorsteuerung 16 derart vorgesehen sein, dass die Stärke des dem Antriebsmotor 14 zugeführten Stroms an die jeweils vorliegende systeminhärente Kraft 40 angepasst wird. Dies ermöglicht es, äußere Umstände bei der Einstellung der Stärke des dem Antriebsmotor 14 zugeführten Stroms so zu berücksichtigen, dass bei einer manuellen Betätigung der Schiebetür 10 eine von äußeren Bedingungen im Wesentlichen unabhängige, gleich bleibend minimale Kraft 44 zur Bewegung der Tür aufgebracht werden muss.

Wenn das Fahrzeug beispielsweise derart an einem Abhang abgestellt ist, dass die Schiebetür 10 in einer Richtung gewissermaßen den Abhang hinaufgeschoben werden muss, kann die Motorsteuerung 10 dafür sorgen, dass dem Antriebsmotor 14 ein entsprechend stärkerer Strom zugeführt wird, damit eine die Schiebetür 10 manuell betätigende Person im Wesentlichen die gleiche Kraft zum Bewegen der Tür aufbringen muss, die erforderlich wäre, um die Schiebetür 10 bei waagerecht abgestelltem Fahrzeug manuell zu betätigen.

Zur Ermittlung der jeweils einzustellenden Stromstärke können geeignete Detektionseinrichtungen, wie z.B. Kraft-, Drehmoment-, Strom- und Wegsensoren, in der Motorsteuerung 16, in dem Antriebsmotor 14, in dem Antriebsmechanismus 18 und/oder an dem Türgriff 36 vorgesehen sein. Alternativ oder zusätzlich kann die Motorsteuerung 16 mit einem Neigungssensor verbunden sein, welcher die jeweilige Neigung des Fahrzeugs ermittelt.

Es wird darauf hingewiesen, dass bei diesem manuellen Motorsteuerungsmodus mit variabler Stromstärke die Stärke des dem Antriebsmotor 14 zugeführten Stroms nicht nur von Betätigungsvorgang zu Betätigungsvorgang in Abhängigkeit von äußeren Umständen eingestellt werden kann, sondern auch während eines Öffnungs- bzw. Schließvorgangs zur Anpassung an sich ändernde äußere Umstände geregelt werden kann.

Bisher wurde davon ausgegangen, dass die im manuellen Motorsteuerungsmodus fest voreingestellte oder in Abhängigkeit von äußeren Bedingungen eingestellte Stromstärke so gewählt ist, dass die der manuellen Betätigung entgegenwirkende systeminhärente Kraft 40 im Wesentlichen vollständig kompensiert bzw. neutralisiert wird, damit die Schiebetür 10 mit einer minimalen manuellen Kraft 44 von nahe zu Null bewegt werden kann.

Alternativ ist es jedoch auch möglich, die Stärke des dem Antriebsmotor 14 zugeführten Stroms so einzustellen, dass zur manuellen Bewegung der Schiebetür 10 eine Kraft 44 durch eine die Schiebetür 10 bewegende Person aufgebracht werden muss, welche um einen definierten Betrag größer als Null ist.

Hierbei kann die Möglichkeit gegeben sein, dass die Stärke der für eine manuelle Betätigung der Schiebetür 10 aufzubringende Kraft 44 bzw. das Ausmaß der Unterstützung einer manuellen Türbetätigung durch den Antriebsmotor 14 durch einen Nutzer oder Halter des Fahrzeugs entsprechend persönlichen Bedürfnissen voreingestellt werden kann, beispielsweise auf beliebige Werte oder in Form fest vorgegebener Stufen.

Unterbricht eine die Tür 10 manuell betätigende Person einen Öffnungs-oder Schließvorgang, so wird die Stromzufuhr zu dem Antriebsmotor 14 durch die Motorsteuerung 16 gestoppt, damit dieser keine Kraft mehr auf die Tür 10 ausübt. Eine derartige Unterbrechung eines Öffnungs- bzw. Schließvorgangs kann z.B. mit Hilfe des Kontaktsensors 34 dadurch detektiert werden, dass die Person den Türgriff 36 der Tür 10 loslässt, und / oder dadurch, dass die Person die Tür 10 nicht aktiv weiterbewegt oder festhält.

Nach einer Unterbrechung eines manuellen Öffnungs- oder Schließvorgangs kann die Türbetätigung entweder manuell oder durch eine entsprechende Betätigung der Fernbedienung im Automatikbetrieb fortgesetzt werden.

### Bezugszeichenliste

- 10: Schiebetür
- 11: Schlitten
- 12: Führungsschiene
- 14: Antriebsmotor
- 16: Motorsteuerung
- 18: Antriebsmechanismus
- 20: Seilzug
- 22: Seilzug
- 24: Umlenkrolle
- 26: Trommel
- 28: Trommel
- 30: Zahnrad
- 32: Getriebe
- 34: Kontaktsensor
- 36: Türgriff
- 38: Pfeil
- 40: Kraft
- 42: Kraft
- 44: Kraft

## Patentansprüche

1. Verfahren zum Betätigen einer Tür (10), insbesondere eines Fahrzeugs, bei dem ein mit der Tür (10) gekoppelter, zum automatischen Öffnen und Schließen der Tür (10) vorgesehener, elektrischer Antriebsmotor (14) bei einer manuellen Betätigung der Tür (10) durch eine Motorsteuerung derart gesteuert wird, dass der Antriebsmotor (14) eine Kraft (42) auf die Tür (10) ausübt, durch welche eine der manuellen Betätigung entgegenwirkende systeminhärente Kraft (40) zumindest teilweise kompensiert wird,
**dadurch gekennzeichnet, dass** bei einer manuellen Betätigung der Tür (10)
der Antriebsmotor (14) mit einem Strom einer vorbestimmten Stärke beaufschlagt wird und die an den Antriebsmotor (14) angelegte Spannung offen gelassen wird.

2. Verfahren nach Anspruch 1,
**dadurch gekennzeichnet, dass**
der Antriebsmotor (14) derart gesteuert wird, dass die Stärke der durch den Antriebsmotor (14) auf die Tür (10) ausgeübten Kraft (44) im Wesentlichen unabhängig von der Geschwindigkeit ist, mit welcher die Tür manuell betätigt wird.

3. Verfahren nach Anspruch 1 oder 2,
**dadurch gekennzeichnet, dass**
die vorbestimmte Stromstärke auf einen festen Wert voreingestellt wird.

4. Verfahren nach einem der vorherigen Ansprüche,
**dadurch gekennzeichnet, dass**
die vorbestimmte Stromstärke in Abhängigkeit von äußeren Einflüssen, wie z.B. der Fahrzeugneigung, eingestellt wird.

5. Verfahren nach einem der vorherigen Ansprüche,
**dadurch gekennzeichnet, dass**
der Grad, in wieweit die der manuellen Betätigung entgegenwirkende systeminhärente Kraft (40) kompensiert wird, durch einen Nutzer voreingestellt wird.

6. Verfahren nach einem der vorherigen Ansprüche,
**dadurch gekennzeichnet, dass**
die Tür (10) bei einer Betätigung mittels einer Fernbedienung im Wesentlichen ausschließlich durch den Antriebsmotor (14) betätigt wird.

7. Verfahren nach Anspruch 6,
**dadurch gekennzeichnet, dass**
der Antriebsmotor (14) durch die Motorsteuerung (16) so gesteuert wird, dass sich die Tür (10) mit einer vorgegebenen Geschwindigkeit bewegt.

8. Verfahren nach einem der vorherigen Ansprüche,
**dadurch gekennzeichnet, dass**
die Motorsteuerung (16) aus einem automatischen Modus in einen manuellen Modus wechselt, wenn ein manueller Eingriff in einen automatischen Betätigungsvorgang der Tür (10) detektiert wird.

9. Verfahren nach Anspruch 8,
**dadurch gekennzeichnet, dass**
der manuelle Eingriff durch eine Betätigung eines Türgriffs (36) der Tür (10) detektiert wird.

10. Verfahren nach Anspruch 8 oder 9,
**dadurch gekennzeichnet, dass**
die Tür (10) einen Teil eines elektromagnetischen Schwingkreises bildet und der manuelle Eingriff durch eine Änderung der Impedanz des Schwingkreises detektiert wird.

11. Vorrichtung zum Betätigen einer Tür (10), insbesondere eines Fahrzeugs, mit einem mit der Tür (10) gekoppelten elektrischen Antriebsmotor (14) zum automatischen Öffnen und Schließen der Tür (10) und einer Motorsteuerung (16), durch die der Antriebsmotor (14) bei einer manuellen Betätigung der Tür (10) derart steuerbar ist, dass der Antriebsmotor (14) eine Kraft (42) auf die Tür (10) ausübt, durch welche eine der manuellen Betätigung entgegenwirkende systeminhärente Kraft (40) zumindest teilweise kompensierbar ist,
**dadurch gekennzeichnet, dass**
die Motorsteuerung (16) so ausgebildet ist, dass sie bei einer manuellen Betätigung der Tür (10) den Antriebsmotor (14) mit einem Strom einer vorbestimmten Stärke beaufschlagt und die an den Antriebsmotor (14) angelegte Spannung offen lässt.

## Claims

1. A method of actuating a door (10), in particular of a motor vehicle, wherein an electric drive motor (14) coupled to the door (10) and provided for the automatic opening and closing of the door (10) is controlled by a motor control on a manual actuation of the door (10) such that the drive motor (14) exerts a force (42) onto the door (10) by which a system-inherent force (40) acting against the manual actuation is at least partly compensated,
**characterized in that,**
on a manual activation of the door (10), the drive motor (14) is energized with a current of a predetermined magnitude and the voltage applied to the drive motor (14) is left open

2. A method in accordance with claim 1, **characterized in that** the drive motor (14) is controlled such that the magnitude of the force (44) exerted onto the door (10) by the drive motor (14) is substantially independent of the speed at which the door is manually actuated.

3. A method in accordance with claim 1 or claim 2, **characterized in that** the predetermined current is preset to a fixed value.

4. A method in accordance with any one of the preceding claims, **characterized in that** the predetermined current is set in dependence on external influences such as the vehicle inclination.

5. A method in accordance with any one of the preceding claims, **characterized in that** the degree to which the system-inherent force (40) acting against the manual actuation is compensated is preset by a user.

6. A method in accordance with any one of the preceding claims, **characterized in that** the door (10) is actuated substantially only by the drive motor (14) on an actuation by means of a remote control.

7. A method in accordance with claim 6, **characterized in that** the drive motor (14) is controlled by the motor control (16) such that the door (10) moves at a predetermined speed.

8. A method in accordance with any one of the preceding claims, **characterized in that** the motor control (16) changes from an automatic mode into a manual mode when a manual intervention into an automatic actuation process of the door (10) is detected.

9. A method in accordance with claim 9, **characterized in that** the manual intervention is detected by an actuation of a door handle (36) of the door (10).

10. A method in accordance with claim 8 or claim 9, **characterized in that** the door (10) forms a part of an electromagnetic resonant circuit and the manual intervention is detected by a change in the impedance of the resonant circuit.

11. An apparatus for the actuation of a door (10), in particular of a vehicle, comprising an electric drive motor (14) coupled to the door (10) for the automatic opening and closing of the door (10) and a motor control (16) by which the drive motor (14) is controllable on a manual actuation of the door (10) such that the drive motor (14) exerts a force (42) onto the door (10) by which a system-inherent force (40) acting against the manual actuation can be compensated at least partly,
**characterized in that**
the motor control (16) is made such that, on a manual activation of the door (10), it energizes the drive motor (14) with a current of a predetermined magnitude and leaves open the voltage applied to the drive motor (14).

## Revendications

1. Procédé pour l'actionnement d'une porte (10), en particulier celle d'un véhicule, dans lequel un moteur d'entraînement électrique (14) couplé avec la porte (10) et prévu pour l'ouverture et la fermeture automatique de la porte (10) est commandé lors d'un actionnement manuel de la porte (10) par une commande de moteur de telle manière que le moteur d'entraînement (14) exerce une force (42) sur la porte (10), par laquelle une force (14) inhérente au système et agissant à l'encontre de l'actionnement manuel est au moins partiellement compensée,
**caractérisé en ce que**, lors d'un actionnement manuel de la porte (10), le moteur d'entraînement (14) est alimenté avec un courant d'une intensité prédéterminée, et la tension appliquée au moteur d'entraînement (14) est laissée ouverte.

2. Procédé selon la revendication 1,
**caractérisé en ce que** le moteur d'entraînement (14) est commandé de telle façon que l'intensité de la force (44) exercée par le moteur d'entraînement (14) sur la porte (10) est sensiblement indépendante de la vitesse avec laquelle la porte est actionnée manuellement.

3. Procédé selon la revendication 1 ou 2,
**caractérisé en ce que** l'intensité de courant prédéterminée est préréglée à une valeur fixe.

4. Procédé selon l'une des revendications précédentes,
**caractérisé en ce que** l'intensité de courant prédéterminée est réglée en fonction d'influences extérieures, comme par exemple l'inclinaison du véhicule.

5. Procédé selon l'une des revendications précédentes,
**caractérisé en ce que** le degré suivant lequel la force (40) inhérente au système agissant à l'opposé de l'actionnement manuel est compensée est préréglé par un utilisateur.

6. Procédé selon l'une des revendications précédentes,
**caractérisé en ce que**, lors d'un actionnement au moyen d'une télécommande, la porte (10) est actionnée sensiblement exclusivement par le moteur d'entraînement (14).

7. Procédé selon la revendication 6,
**caractérisé en ce que** le moteur d'entraînement (14) est commandé par la commande de moteur (16) de telle façon que la porte (10) se déplace avec une vitesse prédéterminée.

8. Procédé selon l'une des revendications précédentes,
**caractérisé en ce que** la commande de moteur (16) passe d'un mode automatique à un mode manuel quand on détecte une intervention manuelle dans un processus d'actionnement automatique de la porte (10).

9. Procédé selon la revendication 8,
**caractérisé en ce que** l'intervention manuelle est détectée par un actionnement d'une poignée (36) de la porte (10).

10. Procédé selon la revendication 8 ou 9,
**caractérisé en ce que** la porte (10) forme une partie d'un circuit oscillant électromagnétique, et l'intervention manuelle est détectée par une variation de l'impédance du circuit oscillant.

11. Dispositif pour l'actionnement d'une porte (10), en particulier celle d'un véhicule, comprenant un moteur d'entraînement électrique (14) couplé avec la porte (10) et prévu pour l'ouverture et la fermeture automatique de la porte (10), et une commande de moteur (16) au moyen de laquelle le moteur d'entraînement (14) peut être commandé lors d'un actionnement manuel de la porte (10) de telle manière que le moteur d'entraînement (14) exerce une force (42) sur la porte (10), par laquelle une force (14) inhérente au système et agissant à l'encontre de l'actionnement manuel peut être au moins partiellement compensée,
**caractérisé en ce que** la commande de moteur (16) est réalisée de telle façon que, lors d'un actionnement manuel de la porte (10), elle alimente le moteur d'entraînement .(14) avec un courant d'une intensité prédéterminée, et laisse la tension appliquée au moteur d'entraînement (14) ouverte.
